# EUROPEAN PATENT APPLICATION

(11) **EP 3 678 026 A1**
(43) Date of publication of application: **08.07.2020**
(21) Application number: 18858131.8
(22) Date of filing: 17.09.2018
(51) Int. Cl.: G06F 13/14

(54) **DATA CHECK METHOD, DEVICE AND NETWORK CARD**

(30) Priority: 22.09.2017 CN 201710867695
(71) Applicant: Huawei Technologies Co., Ltd., Longgang District Shenzhen, Guangdong 518129 (CN)
(72) Inventor: QU, Huichun, Shenzhen Guangdong 518129 (CN); WU, Pei, Shenzhen Guangdong 518129 (CN)
(74) Representative: MERH-IP Matias Erny Reichl Hoffmann Patentanwälte PartG mbB
(86) International application number: PCT/CN2018/105957
(87) International publication number: WO 2019/057005

(57) **Abstract**

This application provides a data validation method and apparatus, and a network interface card. A first RNIC validates, by determining whether first data and second data are the same, data stored in a first memory, determines that first data in to-be-transmitted target data is correctly stored in the first memory, and notifies a second RNIC by using an acknowledgement ACK character. In comparison with a prior-art manner in which the first RNIC directly sends the ACK to the second RNIC after receiving a last RDMA packet, a result of storing the target data in a first device is more reliable for a second device. In other words, reliability of the ACK sent by the first device to the second device is enhanced. The ACK sent by the first device to the second device may further be used to indicate that the first data in the target data is correctly stored in the first memory. In this case, a direct memory access (Direct Memory Access, DMA) result of RDMA is more reliable for an upper-layer service application.

## Description

### TECHNICAL FIELD

This application relates to the storage field, and more specifically, to a data validation method and apparatus, and a network interface card.

### BACKGROUND

With development of an NVMe (Non-Volatile Memory express over fabric, NVMe) technology for transmission in a network, remote direct memory access (Remote Direct Memory Access, RDMA) becomes increasingly important in a low-latency technology in the storage field. The RDMA is a data transmission technology generated to reduce a delay of data processing at a server side during network transmission. The RDMA directly transmits data to a storage area of a computer through a network, and quickly transmits the data from a system to a storage of a remote system without affecting an operating system.

In an RDMA-based upper-layer protocol (Upper -layer Protocol, ULP) service, an input/output IO service for accessing storage space is usually divided into an operation of RDMA Send, an operation of RDMA Read, and an operation of RDMA Write. RDMA Send is used to transmit an IO control command, and RDMA Read and RDMA Write are used to transmit IO data (namely, to-be-transmitted target data).

In a process in which the target data is transmitted between a first device and a second device, an RDMA-enabled network interface card (RDMA enable network interface controller, RNIC) in the second device encapsulates, into at least one RDMA packet, the target data that needs to be transmitted, and sends the at least one RDMA packet to an RNIC of the first device by using an RDMA message. After the RNIC of the first device receives a last RDMA packet in the at least one RDMA packet, the RNIC of the first device directly sends an ACK to an RNIC of the second device.

However, an acknowledgement (Acknowledgement, ACK) character directly sent by the RNIC of the first device to the RNIC of the second device can only indicate that the first device receives the last RDMA packet, but the second device cannot determine, by using the ACK sent by the first device, whether the target data in the RDMA packet is stored in a memory of the first device.

### SUMMARY

This application provides a data validation method and apparatus, and a network interface card, to validate, to some extent, whether at least some of target data is stored in a memory of a first device, so that a result of storing the target data in the first device is more reliable for a second device.

According to a first aspect, a data validation method is provided and includes: obtaining, by a first remote direct memory access network interface card RNIC of a first device, first data from a second memory of a second device by using a second RNIC of the second device, where the first data is at least some data in to-be-transmitted target data; caching, by the first RNIC, the first data in a cache of the first RNIC; after the first RNIC stores the target data in a first memory of the first device, reading, by the first RNIC, second data in the target data from the first memory, where the second data and the first data are data at a same location in the target data; and if the first RNIC determines that the first data and the second data are the same, sending, by the first RNIC, an ACK to the second RNIC.

In this embodiment of this application, the first RNIC validates, by determining whether the first data and the second data are the same, the data stored in the first memory, determines that the first data in the to-be-transmitted target data is correctly stored in the first memory, and notifies the second RNIC by using the ACK. In comparison with the prior-art manner in which the first RNIC directly sends the ACK to the second RNIC after receiving a last RDMA packet, a result of storing the target data in the first device is more reliable for the second device. In other words, reliability of the ACK sent by the first device to the second device is enhanced. The ACK sent by the first device to the second device may further be used to indicate that the first data in the target data is correctly stored in the first memory. In this case, a direct memory access (Direct Memory Access, DMA) result of RDMA is more reliable for an upper-layer service application.

Further, when the first data is some target data, in other words, whether only some target data is stored in the first memory is validated, a relatively low requirement is imposed on a capacity of a cache in the first RNIC, and cache costs can be reduced to some extent.

If the first data is all of the target data, it is equivalent to that all of the target data has been validated. This helps determine whether all of the target data is correctly stored in the first memory. In comparison with the solution in which only the some target data is validated, the reliability of the ACK is further increased.

Optionally, the ACK is used to indicate that the first data and the second data are the same, in other words, the first data is stored in the first memory.

Optionally, the first data may be data obtained after a preset memory address length is read in a direction from a last address of a memory address corresponding to the target data in the second memory of the second device to a first address of the memory address corresponding to the target data in the second memory of the second device. Correspondingly, the second data may also be data obtained after the preset memory address length is read in a direction from a last address of a memory address corresponding to the target data in the first memory of the first device to a first address of the memory address corresponding to the target data in the first memory of the first device.

The data of the preset memory address length read in the direction from the last address of the memory address for storing the target data to the first address of the memory address for storing the target data is used as validated data (second data), and the first RNIC does not need to record the first address of the memory address for storing the target data, thereby helping reducing complexity of a first RNIC implementation solution.

With reference to the first aspect, in a possible implementation of the first aspect, in a process in which the first RNIC stores the target data in the first memory, before the first RNIC stores the first data in the target data in the first memory, the method further includes: performing, by the first RNIC, data processing on the first data and obtaining processed first data, where the processed first data is different from the first data; and storing, by the first RNIC, the processed first data in the first memory, where a memory address for storing the processed first data in the first memory is the same as a memory address for storing the first data in the first memory.

Therefore, to avoid a special case in which before the first data is stored in the first memory, the first memory may store same data as the first data, in this embodiment of this application, data processing is performed on the first data, and the processed data is stored in the first memory, to ensure that before the first data is stored in the first memory, the data stored in the first memory is definitely different from the first data. In this case, with reference to a storage mechanism of a data sequence, it can be determined that data whose memory address is located before the memory address of the first data in the second memory is stored in the first memory. In this case, a result of storing the target data in the first device is more reliable for the second device.

With reference to the first aspect, in a possible implementation of the first aspect, the target data is carried in at least one remote direct memory access RDMA packet, the at least one RDMA packet includes a first RDMA packet, and the first RDMA packet is a last RDMA packet in a process of transmitting the at least one RDMA packet; and the obtaining, by a first remote direct memory access network interface card RNIC of a first device, first data from a second memory of a second device by using a second RNIC of the second device includes: receiving, by the first RNIC, the first RDMA packet sent by the second RNIC, where the first RDMA packet carries the first data.

In this case, based on the sequence storage mechanism of the RDMA packet, in this embodiment of this application, whether the last RDMA packet and an RDMA packet transmitted previous to the last RDMA packet are stored in the first memory may further be determined by validating data in the last RDMA packet. This reduces complexity of data validation to some extent, and further helps lower a requirement for a capacity of a cache during implementing a solution in this embodiment of this application.

With reference to the first aspect, in a possible implementation of the first aspect, the target data is carried in a plurality of RDMA packets, the plurality of RDMA packets include a second RDMA packet and at least one third RDMA packet, the second RDMA packet is a last RDMA packet in a process of transmitting the plurality of RDMA packets, and the at least one third RDMA packet is a packet previous to the last transmitted RDMA packet in the process of transmitting the plurality of RDMA packets; and the obtaining, by a first remote direct memory access network interface card RNIC of a first device, first data from a second memory of a second device by using a second RNIC of the second device includes: receiving, by the first RNIC, the second RDMA packet and the at least one third RDMA packet that are sent by the second RNIC, where data carried in the second RDMA packet and data carried in the at least one third RDMA packet form the first data.

With reference to the first aspect, in a possible implementation of the first aspect, the at least one third RDMA packet is one RDMA packet, and the third RDMA packet is the RDMA packet previous to the last transmitted RDMA packet in the process of transmitting the plurality of RDMA packets.

In this embodiment of this application, the data in the last RDMA packet and data in the RDMA packet previous to the last RDMA packet are validated. In comparison with a solution in which any piece of data in the target data is validated at random, this helps reduce complexity of performing data validation by the first RNIC.

According to a second aspect, a data validation apparatus is provided. The data validation apparatus includes modules configured to perform the first aspect or any possible implementation of the first aspect.

According to a third aspect, a network interface card is provided. The network interface card is disposed in a first device, and the network interface card includes a processor, a storage, and a transceiver, the storage stores a program instruction, and the processor runs the program instruction to perform the following steps: controlling the transceiver to obtain first data from a second memory of a second device by using a second network interface card of the second device, where the first data is at least some data in to-be-transmitted target data; caching the first data in a cache of the network interface card; after storing the target data in a first memory of the first device, reading second data in the target data from the first memory, where the second data and the first data are data at a same location in the target data; and if it is determined that the first data and the second data are the same, controlling the transceiver to send an acknowledgement ACK character to the second RNIC.

According to a fourth aspect, a chip is provided and includes a transceiver, a processor, and a storage. The processor is configured to control the transceiver to send/receive a signal, and the storage is configured to store a computer program. The processor is configured to invoke the computer program from the storage and run the computer program, to enable data validation apparatus to perform the method in the first aspect.

According to a fifth aspect, a computer-readable storage medium is provided. The computer-readable storage medium stores an instruction, and when the instruction is run on a computer, the computer is enabled to perform the method in the foregoing aspects.

According to a sixth aspect, a computer program product including an instruction is provided. When the computer program product is run on a computer, the computer is enabled to perform the method in the foregoing aspects.

In this embodiment of this application, the first RNIC validates, by determining whether the first data and the second data are the same, the data stored in the first memory, determines that the first data in the to-be-transmitted target data is correctly stored in the first memory, and notifies the second RNIC by using the ACK. In this case, a result of storing the target data in the first device is more reliable for the second device. In other words, reliability of the ACK sent by the first device to the second device is enhanced.

### BRIEF DESCRIPTION OF DRAWINGS

FIG. 1 is a schematic block diagram of a data transmission apparatus according to an embodiment of this application;
FIG. 2 is a schematic flowchart of a method of an RDMA-based IO read process;
FIG. 3 is a schematic flowchart of a method of an RDMA-based IO write process;
FIG. 4 is a schematic flowchart of a data validation method according to an embodiment of this application;
FIG. 5 is a schematic flowchart of a data validation method based on an IO read process according to an embodiment of this application;
FIG. 6 is a schematic flowchart of a data validation method based on an IO write process according to an embodiment of this application;
FIG. 7 is a schematic block diagram of a data validation apparatus according to an embodiment of this application; and
FIG. 8 is a schematic block diagram of a network interface card according to another embodiment of this application.

### DESCRIPTION OF EMBODIMENTS

The following describes technical solutions of this application with reference to the accompanying drawings.

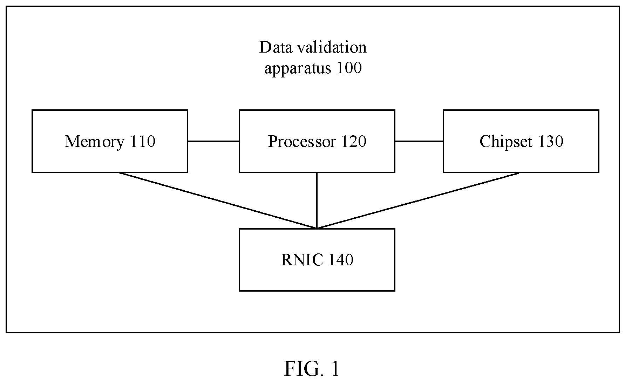

To facilitate understanding of the method in the embodiments of this application, a schematic structural diagram of a data transmission apparatus in the embodiments of this application is first described with reference to FIG. 1.

FIG. 1 is a schematic block diagram of a data transmission apparatus according to an embodiment of this application. A data transmission apparatus 100 shown in FIG. 1 may include a memory 110, a central processing unit 120, a chipset 130, and an RNIC 140. The memory 110, the processor 120, the chipset 130, and the RNIC 140 are connected to each other through an internal connection path.

The memory 110 is configured to store data and an instruction.

The processor 120 is configured to interpret the instruction stored in the memory 110 and process the data stored in the memory 110, and is a control core and a calculation core of data validation apparatus.

The chipset (Chipset) 130 is configured to cooperate with the processor 120 to interpret the instruction stored in the memory 110 or process the data in the memory 110.

The RNIC 140 is configured to connect the data validation apparatus to a network and communicate with another device that accesses the network.

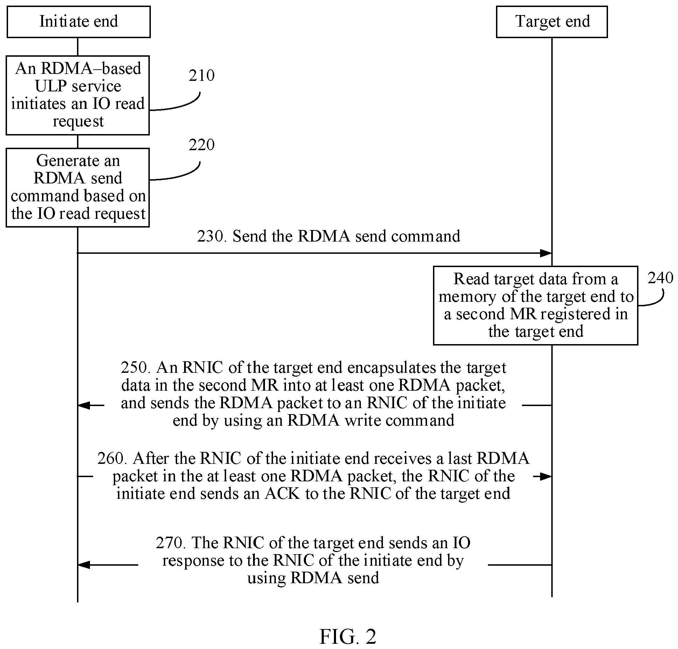

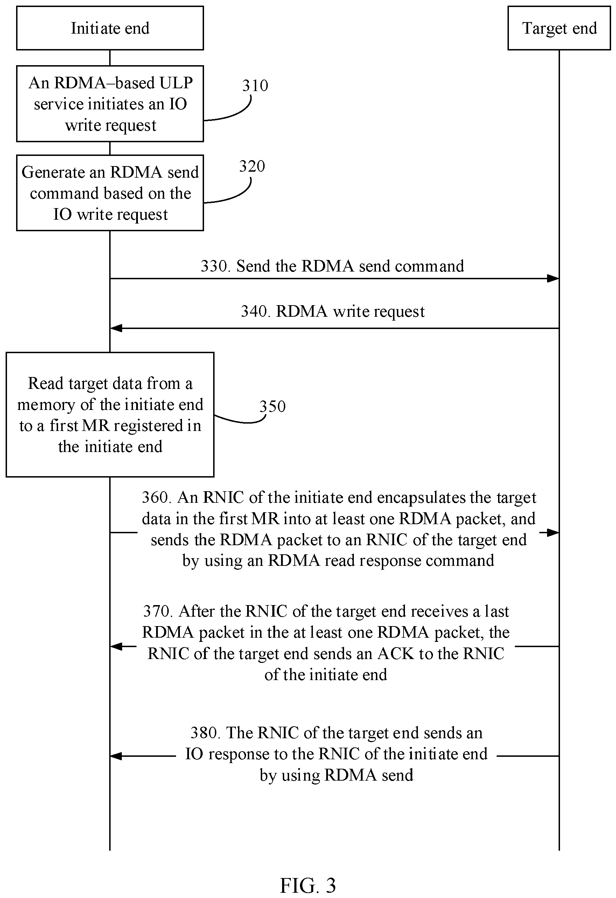

The following describes a conventional data transmission method in detail with reference to FIG. 2 and FIG. 3 based on the apparatus shown in FIG. 1. It should be understood that the apparatus shown in FIG. 1 may be an initiate end that initiates a data IO process shown in FIG. 2 and FIG. 3, and the apparatus shown in FIG. 1 may further be a target end into which data is written or from which data is read by the initiate end shown in FIG. 2 and FIG. 3.

It should be noted that the initiate end and the target end in FIG. 2 and FIG. 3 each may be a server, a storage controller, a storage device, or the like in a storage system. Specific forms of the initiate end and the target end are not limited in this application.

FIG. 2 is a schematic flowchart of a method of an RDMA-based IO read process. The method shown in FIG. 2 includes steps 210 to 280.

210. An RDMA-based ULP service of an initiate (Initiate, INI) end initiates an IO read (IO Read) request.

220. The initiate end generates an RDMA send (RDMA Send) command based on the IO read request.

Specifically, the RDMA send command includes the IO read request and description information of a first target cache of the initiate end. The first target cache is configured to store target data read by using the IO read request. The description information of the first target cache may be information such as a primary key (key) of the first target cache, a virtual address (Virtual Address, VA) of first target cache space, and a length (Length) of the first target cache space.

230. The initiate end sends the RDMA send command to a target (Target, TGT) end.

Specifically, the target end parses the IO read request from the RDMA send command, and extracts the description information of the first target cache.

240. The target end determines a second target cache from a cache of the target end based on the IO read request and the description information of the first target cache, where the second target cache is configured to cache data read from a memory of the target end by using the IO read request.

250. The target end reads the target data from the memory of the target end to the second target cache of the target end based on the IO read request.

For example, the target end may determine a storage address of the target data in the memory of the target end based on the storage address, of the target data, carried in the IO read request, to read, from the memory of the target end to the second target cache of the target end, the target data corresponding to the storage address in the memory.

260. An RNIC of the target end encapsulates the target data in the second target cache into at least one RDMA packet, and sends the RDMA packet to an RNIC of the initiate end by using an RDMA write command.

270. After the RNIC of the initiate end receives a last RDMA packet in the at least one RDMA packet, the RNIC of the initiate end sends an ACK to the RNIC of the target end.

280. The RNIC of the target end sends an IO response (response) to the RNIC of the initiate end by using RDMA send.

Specifically, after the RNIC of the initiate end receives the IO response, a procedure of data transmission between the initiate end and the target end ends.

FIG. 3 is a schematic flowchart of a method of an RDMA-based IO write process. The method shown in FIG. 3 includes steps 310 to 380.

310. An RDMA-based ULP service of an initiate (Initiate, INI) end initiates an IO write (IO Write) request.

320. The initiate end generates an RDMA send command based on the IO write request.

Specifically, the RDMA send command includes the IO write request and description information of a first target cache of the initiate end. The first target cache is configured to store target data to be written in a target end by using the IO write request. The description information of the first target cache may be information such as a primary key (key) of the first target cache, a virtual address (Virtual Address, VA) of the first target cache, and a length (Length) of the first target cache.

330. The initiate end sends the RDMA send command to the target end.

Specifically, the target end parses the IO write request from the RDMA send command, and extracts the description information of the first target cache of the initiate end.

340. The target end determines a second target cache from a cache of the target end based on the received IO write request and the received description information of the first target cache, where the second target cache is configured to cache the target data written by the initiate end into the target end by using the IO write request.

350. The target end sends an RDMA write request (Read Request) to the initiate end.

360. The initiate end reads, from the memory of the initiate end to the first target cache, the target data to be transmitted by using the IO write request.

370. An RNIC of the initiate end encapsulates the target data in the first target cache into at least one RDMA packet, and sends the RDMA packet to an RNIC of the target end by using an RDMA read response (Read Response) command.

380. After the RNIC of the target end receives a last RDMA packet in the at least one RDMA packet, the RNIC of the target end sends an ACK to the RNIC of the initiate end.

390. The RNIC of the target end sends an IO response (response) to the RNIC of the initiate end by using RDMA send.

Specifically, after the RNIC of the initiate end receives the IO response, a procedure of data transmission between the initiate end and the target end ends.

For ease of description, in the following, a device receiving an RDMA packet is referred to as a "first device", and a device sending the RDMA packet is referred to as a "second device". For example, in an IO write process, the first device may be the foregoing target end, and the second device may be the foregoing initiate end. In an IO read process, the first device may be the foregoing initiate end, and the second device may be the foregoing target end.

In a process of performing data transmission on an RDMA-based IO request (write request or read request) shown in FIG. 2 and FIG. 3, after receiving a last RDMA packet that carries the target data and that is sent by an RNIC of the second device, an RNIC of the first device directly sends an ACK to the RNIC of the second device. However, the second device can only determine, by using the ACK, that the RNIC of the first device receives the last RDMA packet that carries the target data, and cannot determine whether the RNIC of the first device stores the target data in a memory of the first device.

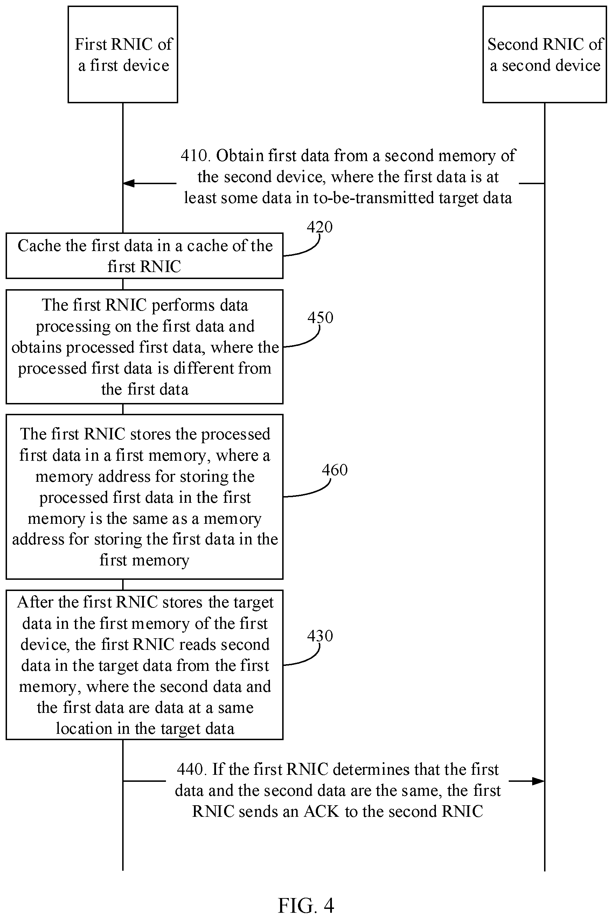

To resolve the foregoing problem, the following describes in detail a data validation method and apparatus in the embodiments of this application with reference to FIG. 4 to FIG. 8.

FIG. 4 is a schematic flowchart of a data validation method according to an embodiment of this application. The method shown in FIG. 4 includes the following steps.

410. A first remote direct memory access network interface card RNIC of a first device obtains first data from a second memory of a second device by using a second RNIC of the second device, where the first data is at least some data in to-be-transmitted target data.

Specifically, the RNIC may be a network interface card (Network Interface Card, NIC) that can implement an RDMA technology and a lower layer protocol (Lower Layer Protocol, LLP).

The to-be-transmitted target data may be data that needs to be directly read from the memory of the second device by the first RNIC of the first device.

That the first data is the at least some data in the to-be-transmitted target data may mean that the first data is all of the to-be-transmitted target data, or may mean that the first data is any piece of data in the to-be-transmitted target data, or may mean that the first data is any 1-byte data in the to-be-transmitted target data.

Optionally, the first data may be data obtained after a preset memory address length is read in a direction from a last address of a memory address corresponding to the target data in the second memory of the second device to a first address of the memory address corresponding to the target data in the second memory of the second device.

It should be understood that the memory address may be a logical address. In other words, memory addresses (logical addresses) for storing the target data may be consecutive, but physical addresses for storing the target data may be discrete or consecutive.

It should be noted that the memory may be expressed in bytes. To be specific, each address in the memory may represent one byte, and in this case, the preset memory address length may be expressed in bytes. Each byte in the memory can be represented by using eight bits. In this case, the pre-stored memory address length may further be expressed in bits. A specific expression of the preset memory address length is not limited in this embodiment of this application.

For example, if the last address of the memory address of the target data in the second memory of the second device is N, and the preset memory address length is four bytes, the first data may be data stored at memory addresses N, N-1, N-2, and N-4.

Optionally, in an embodiment, the target data is carried in at least one remote direct memory access RDMA packet. The at least one RDMA packet includes a first RDMA packet, and the first RDMA packet is a last RDMA packet in a process of transmitting the at least one RDMA packet. Step 410 includes: The first RNIC receives the first RDMA packet sent by the second RNIC, where the first RDMA packet carries the first data.

Specifically, if the to-be-transmitted target data is carried in an RDMA packet, and the RDMA packet that carries the target data may be referred to as an only packet, the first data may be all data in the only packet. If the RDMA packet that carries the target data may be referred to as the only packet, the first data may alternatively be some data in the only packet.

If the to-be-transmitted target data is carried in a plurality of RDMA packets, the packet that carries the first data may be a last transmitted RDMA packet in a process of transmitting the plurality of RDMA packets, namely, a last RDMA packet. The first data may be some data carried in the last RDMA packet, or the first data may be all data carried in the last RDMA packet.

For example, an RNIC of an initiate end may determine, by detecting whether the RDMA packet carries a last identifier, whether a received RDMA packet is the last RDMA packet.

It should further be understood that a data length of the first data may be preset. For example, if the preset data length of the first data is one byte, any one byte may be extracted from the first RDMA packet as the first data. The data length of the first data may alternatively vary with a length of data carried in the first RDMA packet. To be specific, when the first RDMA packet carries four bytes of data, the data length of the first data may be four bytes.

It should be noted that the RDMA packet may be a data packet transmitted based on an RDMA technology, also referred to as an RDMA packet (RDMA Packet).

In the process of transmitting the plurality of RDMA packets, the plurality of RDMA packets may be sequentially stored in the first memory based on a preset sequence (for example, generation data of the RDMA packet). In other words, before an (N-1)^{th} RDMA packet is stored in the first memory, an N^{th} RDMA packet is not stored in the first memory, where N is a natural number, and the N^{th} RDMA packet is an RDMA packet following the (N-1)^{th} RDMA packet.

In this case, based on a sequence storage mechanism of the RDMA packet, in this embodiment of this application, data in the last RDMA packet is validated to further determine whether the last RDMA packet and a transmitted RDMA packet previous to the last RDMA packet are stored in the first memory. This reduces complexity of data validation to some extent, and further helps lower a requirement for a cache capacity in a solution in this embodiment of this application.

Optionally, in an embodiment, the target data is carried in a plurality of RDMA packets. The plurality of RDMA packets include a second RDMA packet and at least one third RDMA packet. The second RDMA packet is a last RDMA packet in a process of transmitting the plurality of RDMA packets, and the at least one third RDMA packet is a packet previous to the last transmitted RDMA packet in the process of transmitting the plurality of RDMA packets. Step 410 includes: The first RNIC receives the second RDMA packet and the at least one third RDMA packet that are sent by the second RNIC, where data carried in the second RDMA packet and data carried in the at least one third RDMA packet form the first data.

Specifically, when the data carried in the second RDMA packet and the data carried in the at least one third RDMA packet form the first data, it may indicate that the first data includes all data in the second RDMA packet and at least some data in the at least one third RDMA packet. The first data may alternatively include some data in the second RDMA packet and at least some data in the at least one third RDMA packet.

It should be noted that the foregoing data length of the first data may be preset. When a data length of the data carried in the second RDMA packet is less than the preset data length, at least some data may be extracted from the at least one third RDMA packet to supplement the preset data length, together with the data carried in the second RDMA packet.

For example, the preset length of the first data is four bytes, and the data length of the data carried in the second RDMA packet is one byte. In this case, it is further required to extract three bytes of data from the at least one third RDMA packet to form the first data with the data in the second RDMA packet, to meet the preset length of the first data.

It should further be understood that when the at least some data extracted from the at least one third RDMA packet and the data in the second RDMA packet form the first data, the some data in the at least one third RDMA may be randomly selected. For example, at least some data in the first RDMA packet initially transmitted in the process of transmitting the plurality of RDMA packets that carry the target data may be selected.

Optionally, in an embodiment, the at least one third RDMA packet is one RDMA packet, and the third RDMA packet is the RDMA packet previous to the last transmitted RDMA packet in the process of transmitting the plurality of RDMA packets.

Optionally, a transmission sequence of the plurality of RDMA packets that carry the target data is the same as an ascending sequence of memory addresses of data in the second memory carried in the plurality of RDMA packets. In other words, when the (N-1)^{th} RDMA packet and the N^{th} RDMA packet in the plurality of RDMA packets are transmitted, a maximum value of a memory address of data carried in the (N-1)^{th} RDMA packet is less than a minimum value of a memory address of data carried in the N^{th} RDMA packet. In addition, memory addresses that are in the second memory and that are of the target data carried in the plurality of RDMA packets are consecutive, and memory addresses that are in the second memory and that are of data in each of the plurality of RDMA packets are also consecutive.

For example, there are three RDMA packets that carry the to-be-transmitted target data. The three RDMA packets include an RDMA packet 1, an RDMA packet 2, and an RDMA packet 3. The three RDMA packets are further transmitted in a successive sequence from the RDMA packet 1 to the RDMA packet 3. In other words, the RDMA packet 3 is a last transmitted RDMA packet in the three RDMA packets. Each RDMA packet carries two bytes of data, and the preset data length of the first data is four bytes. In this case, a data length of data carried in the RDMA packet 3 does not meet the preset data length of the first data. In this case, two bytes of data may be extracted from the RDMA packet 2 to form the first data, together with the data in the RDMA packet 3.

420. The first RNIC caches the first data in a cache of the first RNIC.

430. After the first RNIC stores the target data in the first memory, the first RNIC reads second data from the first memory, where the second data and the first data are data at a same location in the target data.

Specifically, it may be understood that when the second data and the first data are the data at the same location in the target data, a location that is of a memory address of the second data in the first memory and that is within a range of a memory address for storing the target data in the first memory is the same as a location that is of a memory address of the first data in the second memory and that is within a range of a memory address for storing the target data in the second memory. Alternatively, an offset of the memory address that is of the second data in the first memory and that is relative to a last address of the memory address of the target data in the first memory is equal to an offset of the memory address that is of the first data in the second memory and that is relative to a last address of the memory address of the target data in the second memory. In other words, the second data and the first data need to originally be the same data.

440. If the first RNIC determines that the first data and the second data are the same, the first RNIC sends an ACK to the second RNIC.

In this embodiment of this application, the first RNIC validates, by determining whether the first data and the second data are the same, data stored in the first memory, determines the at least some data in the to-be-transmitted target data is correctly stored in the first memory, and notifies the second RNIC by using the ACK. In comparison with a prior-art manner in which the first RNIC directly sends the ACK to the second RNIC after receiving the last RDMA packet, reliability of the ACK is increased. In other words, the ACK may be used to indicate that the at least some data in the target data is correctly stored in the first memory, so that a direct memory access (Direct Memory Access, DMA) result of RDMA is more reliable for an upper-layer service application.

Further, when the first data is some target data, in other words, whether only some target data is stored in the first memory is validated, a relatively low requirement is imposed on a capacity of a cache in the first RNIC, and cache costs can be reduced to some extent.

If the first data is all of the target data, it is equivalent to that all of the target data has been validated. This helps determine whether all of the target data is correctly stored in the first memory. In comparison with the solution in which only the some target data is validated, the reliability of the ACK is further increased.

Optionally, the ACK is used to indicate that the first data and the second data are the same, in other words, the first data is stored in the first memory.

It should be noted that, after the first RNIC sends the ACK to the second RNIC, it may be understood that the data transmission process ends.

It may be learned, with reference to FIG. 1 and FIG. 2, that in the procedure shown in FIG. 1 or FIG. 2, the data transmission ends in step 270 or step 380. In the solution of this embodiment of this application, the data transmission process may end in step 260 or step 370, and signaling exchanges between the first RNIC and the second RNIC may be reduced.

Optionally, in an embodiment, before step 430, the method further includes step 450 and step 460:

450. The first RNIC performs data processing on the first data and obtains processed first data, where the processed first data is different from the first data.

Specifically, in a process in which the first RNIC stores the target data in the first memory, before the first RNIC stores the first data in the target data in the first memory, the first RNIC performs data processing on the first data to obtain the processed first data.

It should be noted that the processing performed on the first data may refer to performing inverse calculation on the first data, so that the processed first data is different from the first data. Alternatively, when the first data includes a plurality of bytes and data content in each byte is different, a sequence of the plurality of bytes in the first data may be scrambled, so that content of the processed first data is different from that of the first data. A specific manner of data processing is not specifically limited in this embodiment of this application.

460. The first RNIC stores the processed first data in the first memory, where a memory address for storing the processed first data in the first memory is the same as the memory address for storing the first data in the first memory.

It should be noted that the target data may be stored in memory space corresponding to a piece of consecutive memory addresses in the second memory. When storing the target data in the first memory, the first RNIC may store the target data in the first memory in a sequence of memory addresses of the target data in the second memory. It is assumed that the memory addresses of the target data in the second memory include a first piece of memory address and a second piece of memory address, the first piece of memory address and the second piece of memory address are consecutive, and an offset of the first piece of memory address is less than an offset of the second piece of memory address. In this case, in a process in which the target data is stored in the first memory, if data in the first piece of memory address is not stored in the first memory, data in the second piece of memory address does not continue to be stored in the first memory. Therefore, based on the storage mechanism of the data sequence, if it is determined that the data in the second piece of storage address is stored in the first memory, it may be considered that the data in the first piece of storage address is stored in the first memory.

If the data in the second piece of storage address is the first data, before the first data is stored in the first memory, data may already be stored in the first memory, and in a special case, content of the data originally stored in the first memory may be the same as that of the first data. In this case, regardless of whether the first data is stored in the first memory, the first data determined to be cached by the first RNIC and the second data read from the first memory are the same. In this case, it cannot be determined, by using the storage mechanism of the data sequence, whether the data stored in the first piece of storage address in the target data is stored in the first memory.

Therefore, to avoid a special case in which before the first data is stored in the first memory, the first memory may store same data as the first data, in this embodiment of this application, data processing is performed on the first data, and the processed data is stored in the first memory, to ensure that before the first data is stored in the first memory, the data stored in the first memory is definitely different from the first data. In this case, with reference to the storage mechanism of the data sequence, it can be determined that data whose memory address is located before the memory address of the first data in the second memory is stored in the first memory, so that a direct memory access (Direct Memory Access, DMA) result of RDMA is more reliable for an upper-layer service application.

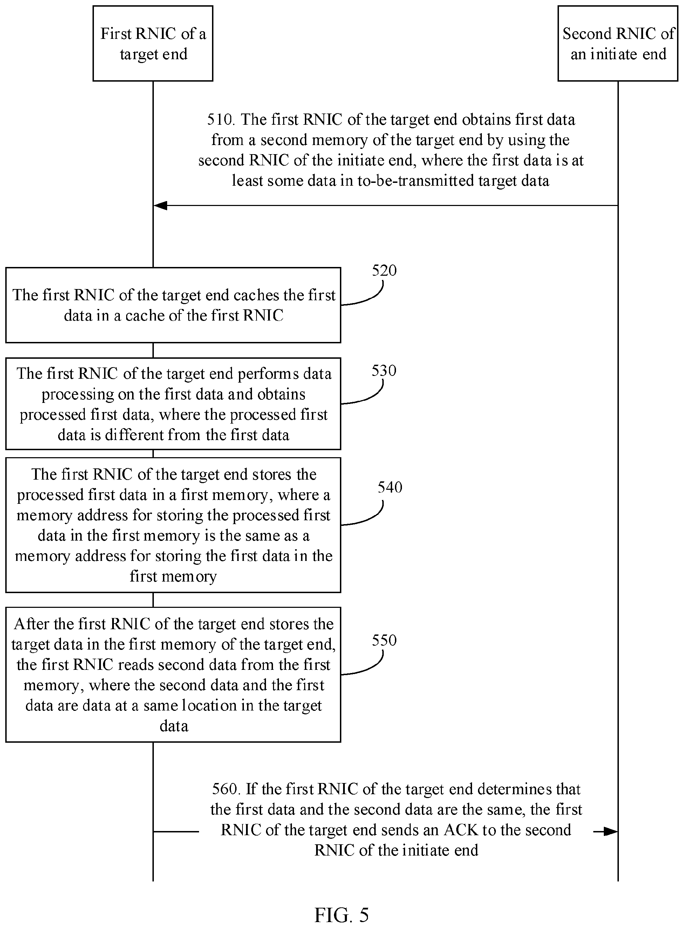

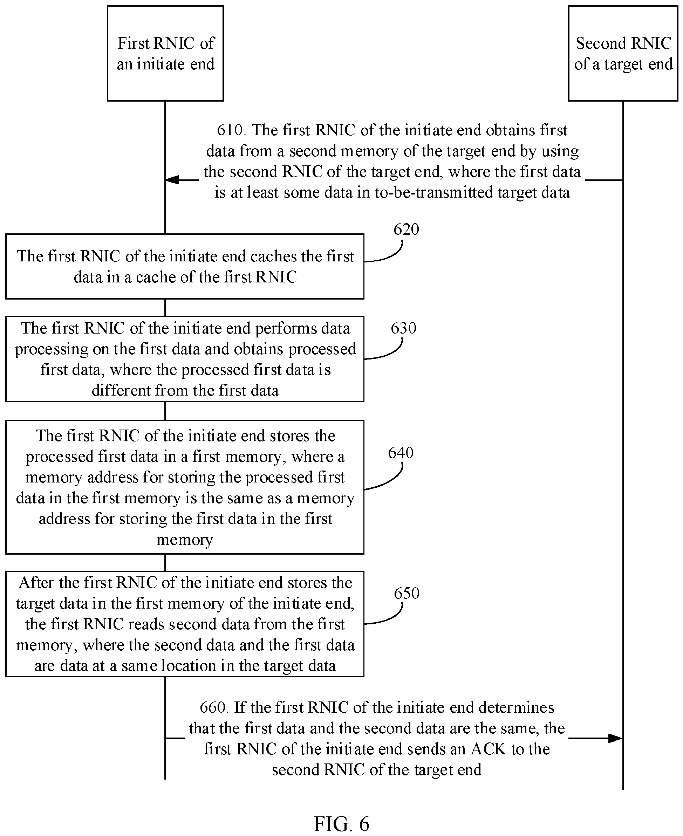

For ease of understanding, the following separately describes the data validation method in the embodiments of this application by using an IO read process and an IO write process with reference to FIG. 5 and FIG. 6. It should be noted that focuses of the IO read process and the IO write process in the following description are parts related to the embodiments of this application. For remaining description, refer to the foregoing description of the IO read process and the IO write process shown in FIG. 2 and FIG. 3. For brevity, details are not described herein again.

FIG. 5 is a schematic flowchart of a data validation method based on an IO read process according to an embodiment of this application. The method shown in FIG. 5 includes steps 510 to 560.

510. A first RNIC of a target end obtains first data from a second memory of the target end by using a second RNIC of an initiate end, where the first data is at least some data in to-be-transmitted target data.

It should be noted that the target end may be a device that initiates the IO read process, and the target end may store data that needs to be read by using the IO read process.

520. The first RNIC of the target end caches the first data in a cache of the first RNIC.

530. The first RNIC of the target end performs data processing on the first data and obtains processed first data, where the processed first data is different from the first data.

540. The first RNIC of the target end stores the processed first data in a first memory, where a memory address for storing the processed first data in the first memory is the same as a memory address for storing the first data in the first memory.

550. After the first RNIC of the target end stores the target data in the first memory of the target end, the first RNIC reads second data from the first memory, where the second data and the first data are data at a same location in the target data.

560. If the first RNIC of the target end determines that the first data and the second data are the same, the first RNIC of the target end sends an ACK to the second RNIC of the initiate end.

FIG. 6 is a schematic flowchart of a data validation method based on an IO write process according to an embodiment of this application. The method shown in FIG. 6 includes steps 610 to 660.

610. A first RNIC of an initiate end obtains first data from a second memory of a target end by using a second RNIC of the target end, where the first data is at least some data in to-be-transmitted target data.

It should be noted that the initiate end may be a device that initiates the IO write process, and the target end may store data that needs to be read by using the IO read process.

620. The first RNIC of the initiate end caches the first data in a cache of the first RNIC.

630. The first RNIC of the initiate end performs data processing on the first data and obtains processed first data, where the processed first data is different from the first data.

640. The first RNIC of the initiate end stores the processed first data in a first memory, where a memory address for storing the processed first data in the first memory is the same as a memory address for storing the first data in the first memory.

650. After the first RNIC of the initiate end stores the target data in the first memory of the initiate end, the first RNIC reads second data from the first memory, where the second data and the first data are data at a same location in the target data.

660. If the first RNIC of the initiate end determines that the first data and the second data are the same, the first RNIC of the initiate end sends an ACK to the second RNIC of the target end.

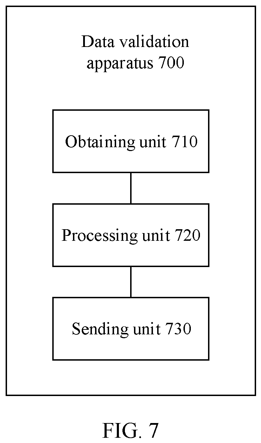

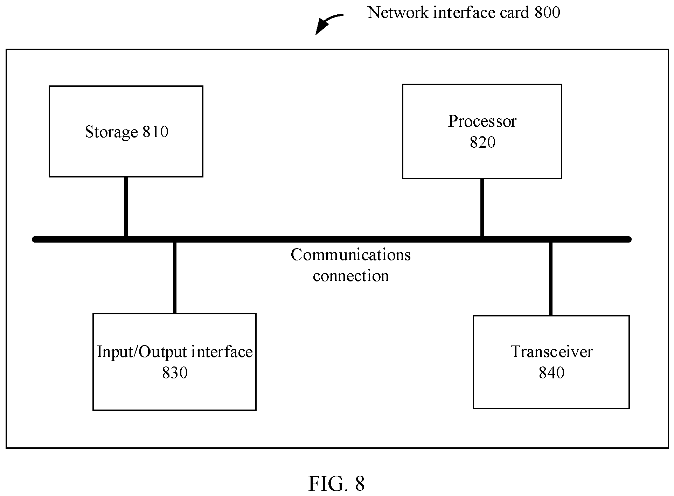

The foregoing describes in detail the data validation method in the embodiments of this application with reference to FIG. 1 to FIG. 6. The following describes in detail a data validation apparatus in the embodiments of this application with reference to FIG. 7 and FIG. 8.

FIG. 7 is a schematic block diagram of a data validation apparatus according to an embodiment of this application. A data validation apparatus 700 shown in FIG. 7 includes an obtaining unit 710, a processing unit 720, and a sending unit 730.

The obtaining unit is configured to obtain first data from a second memory of a second device by using a second RNIC of the second device. The first data is at least some data in to-be-transmitted target data.

The processing unit is configured to cache the first data in a cache of a first RNIC of a first device.

The processing unit is further configured to read second data from a memory of the first device. A location that is of a memory address of the second data in the first memory and that is within a range of a memory address for storing the target data in the first memory is the same as a location that is of a memory address of the first data in the second memory and that is within a range of a memory address for storing the target data in the second memory.

If the first RNIC determines that the first data and the second data are the same, the sending unit is configured to send an ACK to the second RNIC.

Optionally, in an embodiment, the processing unit is further configured to: process the first data, and obtain processed first data, where the processed first data is different from the first data. The processing unit is further configured to store the processed first data in the first memory. A memory address for storing the processed first data in the first memory is the same as the memory address for storing the first data stored in the first memory.

Optionally, in an embodiment, a packet carrying the target data includes at least one remote direct memory access RDMA packet. The at least one RDMA packet includes a first RDMA packet, and the first RDMA packet is a last RDMA packet in a process of transmitting the at least one RDMA packet.

The obtaining unit is specifically configured to receive the first RDMA packet sent by the second RNIC. The first RDMA packet carries the first data.

Optionally, in an embodiment, the packet carrying the target data includes a plurality of RDMA packets, the plurality of RDMA packets include a second RDMA packet and at least one third RDMA packet. The second RDMA packet is a last RDMA packet in a process of transmitting the plurality of RDMA packets, and the at least one third RDMA packet is a packet previous to the last transmitted RDMA packet in a process of transmitting the plurality of RDMA packets.

The obtaining unit is specifically configured to receive the second RDMA packet and the at least one third RDMA packet that are sent by the second RNIC. Data carried in the second RDMA packet and data carried in the at least one third RDMA packet form the first data.

Optionally, in an embodiment, the at least one third RDMA packet is one RDMA packet, and the third RDMA packet is the packet previous to the last transmitted RDMA packet in the process of transmitting the plurality of RDMA packets.

In an optional embodiment, the data validation apparatus 700 may be a network interface card 800. The obtaining unit 710 and the sending unit 730 may be a transceiver 840 in the network interface card. The processing unit 720 may be a processor 820 in the network interface card, and the network interface card may further include an input/output interface 830 and a storage 810. Details are shown in FIG. 8.

FIG. 8 is a schematic block diagram of a network interface card according to another embodiment of this application. The network interface card 800 shown in FIG. 8 may include the storage 810, the processor 820, the input/output interface 830, and the transceiver 840. The storage 810, the processor 820, the input/output interface 830, and the transceiver 840 are connected by using an internal connection path. The storage 810 is configured to store a program instruction. The processor 820 is configured to execute the program instruction stored in the storage 810, to control the input/output interface 830 to receive data such as input data and information, an output operation result, and control the transceiver 840 to send a signal.

The processor runs the program instruction to perform the steps performed by the first RNIC of the first device. For example, the processor may control the transceiver to obtain first data from a second memory of a second device by using a second network interface card of the second device, where the first data is at least some data in to-be-transmitted target data; cache the first data in a cache of the network interface card; after storing the target data in a first memory of the first device, read second data in the target data from the first memory, where the second data and the first data are data at a same location in the target data; and if it is determined that the first data and the second data are the same, control the transceiver to send an acknowledgement ACK character to the second RNIC.

Optionally, the cache may be disposed in the storage.

It should be understood that, in this embodiment of this application, the processor 820 may be a general-purpose central processing unit (Central Processing Unit, CPU), a microprocessor, an application-specific integrated circuit (Application Specific Integrated Circuit, ASIC), or one or more integrated circuits, and is configured to perform a related program, to implement the technical solutions provided in the embodiments of this application.

It should be further understood that the transceiver 840 is also referred to as a communications interface, and implements communication between the data validation apparatus 800 and another device or a communications network by using a transceiver apparatus including but not limited to a transceiver.

The storage 810 may include a read-only memory and a random access memory, and provide an instruction and data to the processor 820. A part of the processor 820 may further include a non-volatile random access memory. For example, the processor 820 may further store information about a device type.

In an implementation process, steps in the foregoing methods can be implemented by using a hardware integrated logical circuit in the processor 820, or by using an instruction in a form of software. The data validation method disclosed with reference to the embodiments of this application may be directly performed and completed by a hardware processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 810, and the processor 820 reads information in the storage 810 and completes the steps in the foregoing methods in combination with hardware of the processor. To avoid repetition, details are not described herein.

It should be understood that the processor in this embodiment of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logical device, discrete gate or transistor logical device, discrete hardware component, or the like. The general-purpose processor may be a microprocessor, or the processor may be any conventional processor or the like.

In an optional embodiment, the foregoing data validation apparatus may be an RNIC located in a storage system 600, and the storage system further includes a memory (Memory), a chipset (Chipset), and a central processing unit (Central Processing Unit, CPU).

It should be understood that in the embodiments of this application, "B corresponding to A" indicates that B is associated with A, and B may be determined based on A. However, it should further be understood that determining B based on A does not mean that B is determined based on A only. Alternatively, B may be determined based on A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, and a magnetic tape), an optical medium (for example, a digital versatile disc (Digital Versatile Disc, DVD)), or a semiconductor medium (for example, a solid-state drive (Solid State Disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data validation method, comprising:
obtaining, by a first remote direct memory access network interface card RNIC of a first device, first data from a second memory of a second device by using a second RNIC of the second device, wherein the first data is at least some data in to-be-transmitted target data;
caching, by the first RNIC, the first data in a cache of the first RNIC;
after the first RNIC stores the target data in a first memory of the first device, reading, by the first RNIC, second data in the target data from the first memory, wherein the second data and the first data are data at a same location in the target data; and
if the first RNIC determines that the first data and the second data are the same, sending, by the first RNIC, an acknowledgement ACK character to the second RNIC.

2. The method according to claim 1, wherein in a process in which the first RNIC stores the target data in the first memory, before the first RNIC stores the first data in the target data in the first memory, the method further comprises:
Performing, by the first RNIC, data processing on the first data and obtaining processed first data, wherein the processed first data is different from the first data; and
storing, by the first RNIC, the processed first data in the first memory, wherein a memory address for storing the processed first data in the first memory is the same as a memory address for storing the first data in the first memory.

3. The method according to claim 1 or 2, wherein the target data is carried in at least one remote direct memory access RDMA packet, the at least one RDMA packet comprises a first RDMA packet, and the first RDMA packet is a last RDMA packet in a process of transmitting the at least one RDMA packet; and
the obtaining, by a first remote direct memory access network interface card RNIC of a first device, first data from a second memory of a second device by using a second RNIC of the second device comprises:
receiving, by the first RNIC, the first RDMA packet sent by the second RNIC, wherein the first RDMA packet carries the first data.

4. The method according to claim 1 or 2, wherein the target data is carried in a plurality of RDMA packets, the plurality of RDMA packets comprise a second RDMA packet and at least one third RDMA packet, the second RDMA packet is a last RDMA packet in a process of transmitting the plurality of RDMA packets, and the at least one third RDMA packet is a packet previous to the last transmitted RDMA packet in the process of transmitting the plurality of RDMA packets; and
the obtaining, by a first remote direct memory access network interface card RNIC of a first device, first data from a second memory of a second device by using a second RNIC of the second device comprises:
receiving, by the first RNIC, the second RDMA packet and the at least one third RDMA packet that are sent by the second RNIC, wherein data carried in the second RDMA packet and data carried in the at least one third RDMA packet form the first data.

5. The method according to claim 4, wherein the at least one third RDMA packet is one RDMA packet, and the third RDMA packet is the RDMA packet previous to the last transmitted RDMA packet in the process of transmitting the plurality of RDMA packets.

6. A data validation apparatus, comprising:
an obtaining unit, configured to obtain first data from a second memory of a second device by using a second remote direct memory access network interface card RNIC of the second device, wherein the first data is at least some data in to-be-transmitted target data;
a processing unit, configured to cache, in a cache of a first RNIC of a first device, the first data obtained by the obtaining unit, wherein
the processing unit is further configured to: after the first RNIC stores the target data in the first memory of the first device, read second data in the target data from the first memory, wherein the second data and the first data are data at a same location in the target data; and
a sending unit, configured to: if the first RNIC determines that the first data and the second data are the same, send an acknowledgement ACK character to a second RNIC.

7. The apparatus according to claim 6, wherein
the processing unit is further configured to perform data processing on the first data and obtain processed first data, wherein the processed first data is different from the first data; and
the processing unit is further configured to store the processed first data in the first memory, wherein a memory address for storing the processed first data in the first memory is the same as a memory address for storing the first data in the first memory.

8. The apparatus according to claim 6 or 7, wherein a packet carrying the target data comprises at least one remote direct memory access RDMA packet, the at least one RDMA packet comprises a first RDMA packet, and the first RDMA packet is a last RDMA packet in a process of transmitting the at least one RDMA packet; and
the obtaining unit is specifically configured to receive the first RDMA packet sent by the second RNIC, wherein the first RDMA packet carries the first data.

9. The apparatus according to claim 6 or 7, wherein a packet carrying the target data comprises a plurality of RDMA packets, the plurality of RDMA packets comprise a second RDMA packet and at least one third RDMA packet, the second RDMA packet is a last RDMA packet in a process of transmitting the plurality of RDMA packets, and the at least one third RDMA packet is a packet previous to the last transmitted RDMA packet in the process of transmitting the plurality of RDMA packets; and
the obtaining unit is specifically configured to receive the second RDMA packet and the at least one third RDMA packet that are sent by the second RNIC, wherein data carried in the second RDMA packet and data carried in the at least one third RDMA packet form the first data.

10. The apparatus according to claim 9, wherein the at least one third RDMA packet is one RDMA packet, and the third RDMA packet is the packet previous to the last transmitted RDMA packet in the process of transmitting the plurality of RDMA packets.

11. A network interface card, disposed in a first device, wherein the network interface card comprises a processor, a storage, and a transceiver, the storage stores a program instruction, and the processor runs the program instruction to perform the following steps:
controlling the transceiver to obtain first data from a second memory of a second device by using a second network interface card of the second device, wherein the first data is at least some data in to-be-transmitted target data;
caching the first data in a cache of the network interface card;
after storing the target data in a first memory of the first device, reading second data in the target data from the first memory, wherein the second data and the first data are data at a same location in the target data; and
if it is determined that the first data and the second data are the same, controlling the transceiver to send an acknowledgement ACK character to the second RNIC.
